# EUROPEAN PATENT APPLICATION

(11) **EP 1 107 119 A2**
(43) Date of publication of application: **13.06.2001**
(21) Application number: 00203898.2
(22) Date of filing: 07.11.2000
(51) Int. Cl.: G06F 11/00

(54) **Extending cluster membership and quorum determinations to intelligent storage systems**

(30) Priority: 02.12.1999 US 454248
(71) Applicant: SUN MICROSYSTEMS, INC., Palo Alto, California 94303 (US)
(72) Inventor: Khalidi, Yousef A., Cupertino, CA 95014 (US)
(74) Representative: Hanna, Peter William Derek

(57) **Abstract**

One embodiment of the present invention provides a system that establishes an agreement between members of a cluster of nodes in a clustered computing system for purposes of forming a new cluster if there is a failure to communicate with a member of the cluster. The system operates by detecting a failure to communicate with the member of the cluster. In response to detecting the failure, the system attempts to establish an agreement between a group of nodes in the cluster that constitute a quorum of the members of the cluster. This process of establishing an agreement involves initiating communications from the intelligent storage device controller with other nodes in the cluster. The intelligent storage device controller additionally controls at least one storage device. If such agreement is established, the system forms the new cluster from the members of the cluster that have reached agreement.

## Description

### BACKGROUND

### Field of the Invention

The present invention relates to intelligent secondary storage systems for computers. More specifically. the present invention relates to a method and an apparatus for establishing a quorum between nodes in a clustered computing system that uses an intelligent storage device controller as a cluster member in establishing the quorum.

### Related Art

In clustered computer systems. computing nodes are closely-coupled into a cluster of related computing nodes that can share resources and work together in completing computational tasks. One advantage of a clustered computing system is that a cluster, if designed properly, can continue to operate even when nodes in the cluster fail. or when communication links between nodes in the cluster fail.

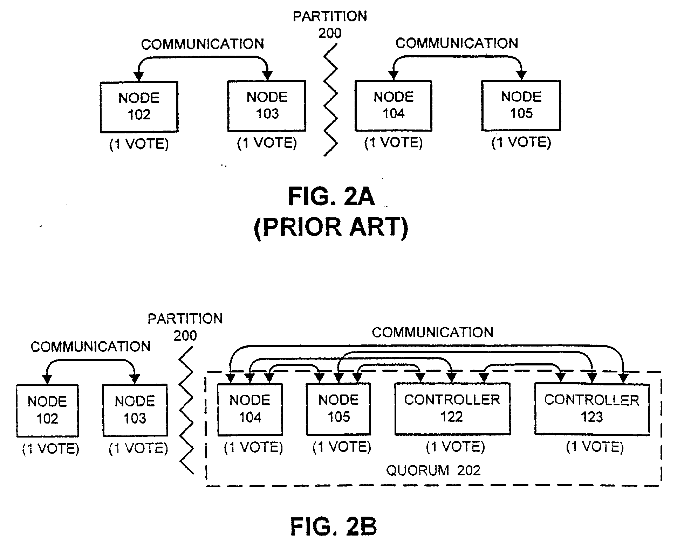

A problem can arise if a clustered computing system somehow becomes partitioned into two separate groups of nodes that are unable to communicate with each other. For example, referring the FIG. 2A, suppose a communication link failure creates a partition 200, which divides nodes 102-105 in two groups of nodes 102-103 and 104-105 that are unable to communicate with each other. (The nodes typically detect such a failure by periodically exchanging "heartbeat" information with each other. If the heartbeat information is not properly received, some type of communication link or node failure has occurred.) Partitioning of a clustered computing system can create problems if both groups of nodes continue to perform the same tasks, because both groups can potentially attempt to operate on a shared resource, such as a shared file, at the same time.

This problem is commonly referred to as the "split brain" problem. One way to prevent the split brain problem is to use a quorum mechanism that allows a group of nodes to access shared resources of the clustered computing system only if the group contains a majority of the nodes of the clustered computing system. In this way, at most one group of nodes at a time can be granted access to the shared resources of the clustered computing system. This prevents the "split brain" problem.

However, even with a quorum mechanism, a clustered computing system can still have problems in certain situations. For example, in FIG. 2A, a tournode cluster is divided into two groups of nodes each of which has two nodes. In this case, neither of the groups of nodes, 102-103 nor 104-105, has a majority. Hence, neither of the groups, 102-103 or 104-105, can access the shared resources of the clustered computing system. This problem can be somewhat alleviated by giving different numbers of "votes" to different members of a cluster. For example, in FIG. 2A. if node 102 is given two votes for purposes of determining a quorum. nodes 102-103 will have three of the five votes in the cluster and will hence have a majority of the votes in the cluster. This allows nodes 102-103 to establish a quorum.

However, even assigning different numbers of votes to different nodes does not work in certain situations. For example, suppose in FIG. 2A that nodes 102 is given two votes, and suppose that nodes 102-103 fail. The remaining nodes 104-105 will not be able to establish a quorum, in spite of the fact that no other nodes are active.

Existing solutions to the problem of detecting failures in a clustered computing system and forming a new cluster have so far overlooked the possibility of using other resources within the clustered computer system. For example, intelligent storage device controllers now have enough processing power and memory to help in the process of forming a cluster.

What is needed is a method and an apparatus that makes use of other resources within a clustered computing system, such as intelligent storage device controllers, to aid in the process of detecting failures in the clustered computing system and reconfiguring the clustered computing system.

### SUMMARY

One embodiment of the present invention provides a system that establishes an agreememt between members of a cluster of nodes in a clustered computing system for purposes of forming a new cluster if there is a failure to communicate with a member of the cluster. The system operates by detecting a failure to communicate with the member of the cluster. In response to detecting the failure, the system attempts to establish an agreement between a group of nodes in the cluster that constitute a quorum of the members of the cluster. This process of establishing an agreement involves initiating communications from the intelligent storage device controller with other nodes in the cluster. The intelligent storage device controller additionally controls at least one storage device. If such agreement is established, the system forms the new cluster from the members of the cluster that have reached agreement.

In one embodiment of the present invention, the quorum contains a subset of the members of the cluster with more than one half of a number of votes that are distributed between the members of the cluster. In a variation on this embodiment, different members of the cluster can have different numbers of votes for purposes of establishing the quorum. In another variation on this embodiment, the intelligent storage device controller has one vote for each storage device under its control for purposes of establishing the quorum.

In one embodiment of the present invention, the system detects the failure by periodically communicating with other members of the cluster in order to determine whether communications with the other members of the cluster have failed. In a variation on this embodiment, communicating with the other members of the cluster involves communicating information that enables members of the cluster to verify that they have a consistent view of a state of the cluster.

In one embodiment of the present invention, the system detects the failure by periodically receiving information at the intelligent storage device controller from other members of the cluster. This information enables the intelligent storage device controller to determine whether communications with the other members of the cluster have failed.

In one embodiment of the present invention, in forming the new cluster the system additionally excludes nodes in the clustered computing system that are not members of the new cluster from accessing shared resources of the clustered computing system.

In one embodiment of the present invention, the intelligent storage device controller can additionally process both file-level and block-level accesses to a storage device.

In one embodiment of the present invention, cluster membership gives a node access to shared resources of the clustered computing system.

### BRIEF DESCRIPTION OF THE FIGURES

FIG. 1 illustrates a clustered computing system in accordance with an embodiment of the present invention.

FIG. 2A illustrates an example of a partition between nodes in a clustered computing system.

FIG. 2B illustrates an example of partition between nodes in another clustered computing system in accordance with an embodiment of the present invention.

FIG. 3 illustrates system layers involved in performing a file system access wherein block-level commands are transferred to a storage system in accordance with an embodiment of the present invention.

FIG. 4 illustrates system layers involved in performing a file system access wherein file-level commands are transferred to a storage system in accordance with an embodiment of the present invention.

FIG. 5 is a flow chart illustrating the process of detecting a communication failure in accordance with an embodiment of the present invention.

### DETAILED DESCRIPTION

The following description is presented to enable any person skilled in the art to make and use the invention. and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

The data structures and code described in this detailed description are typically stored on a computer readable storage medium, which may be any device or medium that can store code and/or data for use by a computer system. This includes, but is not limited to, magnetic and optical storage devices such as disk drives, magnetic tape, CDs (compact discs) and DVDs (digital video discs). and computer instruction signals embodied in a transmission medium (with or without a carrier wave upon which the signals are modulated). For example, the transmission medium may include a communications network. such as the Internet.

### Clustered Computing System

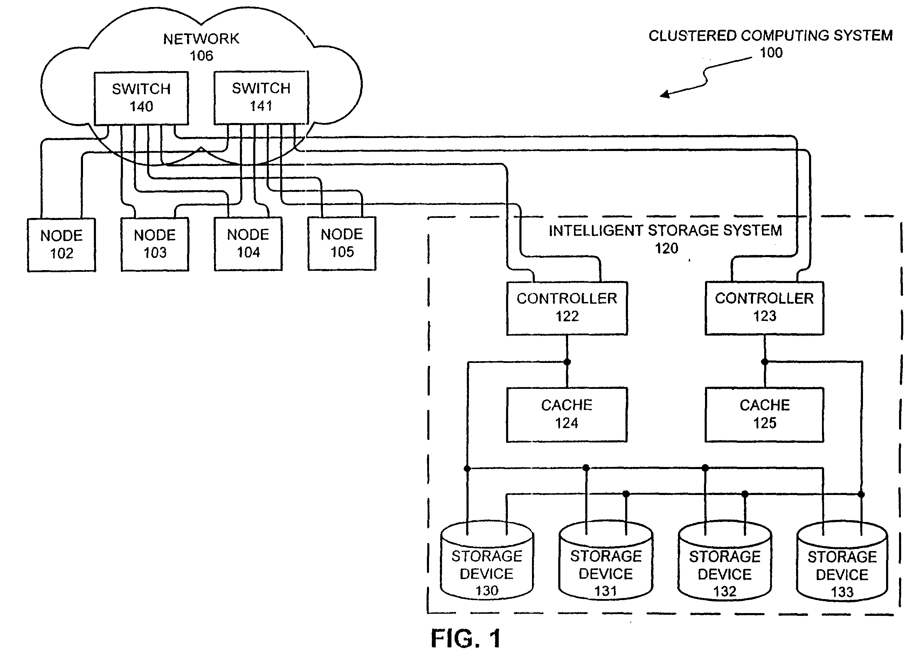

FIG. 1 illustrates clustered computing system 100 in accordance with an embodiment of the present invention. Clustered computing system 100 includes nodes 102-105, which are coupled to intelligent storage system 120 through network 106. Nodes 102-105 are clustered together so that they can share resources, such as intelligent storage system 120. Nodes 102-105 can include any type of computers, including, but not limited to, computers based upon microprocessors, mainframe processors, device controllers, and computational engines within appliances. Note that nodes 102-105 may additionally include semiconductor memory as well as other computer system components.

In the illustrated embodiment, nodes 102-105 are coupled together through network 106. Network 106 can include any type of wire or wireless communication channel capable of coupling together nodes 102-105 and intelligent storage system 120. This includes, but is not limited to, a local area network, a wide area network, or a combination of networks. In the illustrated embodiment, network 106 includes switches 140 and 141, each of which has separate connections to nodes 102-105 and intelligent storage system 120. This provides fault-tolerance, because if either of switches 140 or 141 fails, the other switch can continue to provide network connectivity.

In one embodiment of the present invention, nodes 102-105 provide fault-tolerance by allowing failovers between nodes 102-105. For example, suppose node 102 is acting as a primary server and node 103 is acting as a backup secondary server. If node 102 fails, node 103 can take over the server functions performed by node 102.

Intelligent storage system 120 includes controller 122 and cache 124, which are coupled to storage devices 130-133. lntelligent storage system 120 additionally includes controller 123 and cache 125, which are similarly coupled to storage devices 130-133. Furthermore, each of controllers 122 and 123 have separate linkages to switches 140 and 141 within network 106.

Note that providing two controllers 122-123 and two caches 124 -125 allows intelligent storage system 120 to provide fault-tolerance in cases where one of the two controllers 122-123 or one of the two caches 124-125 fails. Also note that the present invention can additionally apply to non-fault-tolerant storage systems that include only a single controller and a single cache.

Controllers 122-123 can include any type of computational devices that can be configured to act as controllers for storage devices. During operation, controllers 122-123 manage a number of components, including storage devices 130-133 and caches 124-125. Controllers 122-123 can also manage mirroring of caches 124-125. This keeps caches 124 and 125 consistent with each other for fault-tolerance purposes.

Note that controllers 122-123 typically operate under control of a file server located on one of nodes 102-105. Controllers 122-123 can process block-level access requests from the file server in the form of a storage device identifier and a block number.

Caches 124 and 125 can include any type of random access memory for caching data from nodes 102-105. In one embodiment of the present invention, caches 124-125 include non-volatile random access memory based upon flash memory or battery backed up memory. This allows a transaction to be permanently committed into non-volatile storage in caches 124-125 without having to wait for storage devices 130-133.

Storage devices 130-133 can include any type of non-volatile storage devices for storing code and/or data for nodes 102-105. This includes, but is not limited to, magnetic storage devices (such as disk drives or tape drives), optical storage devices and magneto-optical storage devices. This also includes non-volatile semiconductor storage devices, such as flash memories or battery-backed up random access memories. In one embodiment of the present invention storage. storage devices 130-133 include disk drives.

If no failure occurs, intelligent storage system 120 operates generally as follows. A node, such as node 102, makes an access request, such as a read operation, to intelligent storage system 120. Controller 122 within intelligent storage system 120 receives the access request and tries to satisfy the access request within local cache 124. If necessary, controller 122 sends a request to a storage device, such as storage device 130, to complete the request. If the access is a read operation, storage device 130 returns the requested data, and controller 122 forwards to requested data back to node 102.

### Partition

FIG. 2A illustrates an example of a partition between nodes 102-105 in clustered computing system 100. As mentioned above, partition 200 separates nodes 102-103 from nodes 104-105. Nodes 102-103 detect the partition 200 when a periodic heartbeat/monitoring process fails to communicate with nodes 104-105. Nodes 102-103 then communicate with each other in an attempt to establish a quorum. Similarly, nodes 104-105 communicate with each other in an attempt to establish a quorum. Since neither nodes 102-103 nor node 104-105 have a majority of the votes in the cluster, neither nodes 102-103 nor nodes 104-105 can establish a quorum.

FIG. 2B illustrates an example of partition between nodes in clustered computing system 100 in accordance with an embodiment of the present invention. In this case, controllers 122-123 from intelligent storage device 120 from FIG. 1 are also members of the cluster, and can participate in heartbeat/monitoring operations as well as in the process of establishing a quorum. After the partition 200 takes place, nodes 102-103 attempt to establish a quorum, but. are unsuccessful because they only have two out of the total of six votes in the cluster. Nodes 104-105 and controllers 122-123 also communicate with each other in an attempt to establish a quorum. In this case, they successfully establish quorum 202 because they possess four of the six votes in the cluster. In this way, controllers 122-123 within intelligent storage device 120 can aid in the process of detecting a failure and in reforming the cluster.

### System Layers

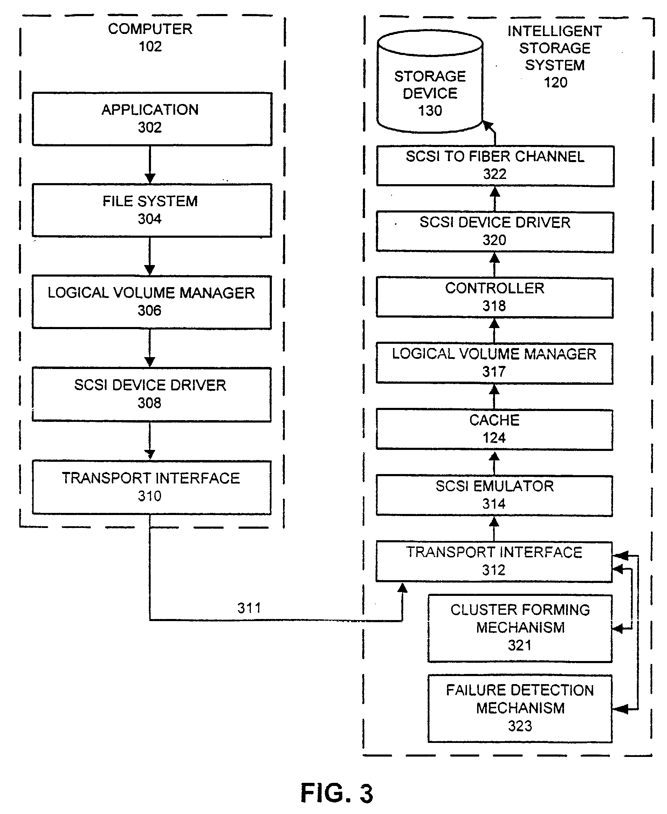

FIG. 3 illustrates system layers involved in performing a file system access wherein block-level commands are transferred to intelligent storage system 120 in accordance with an embodiment of the present invention. These layers are used during one mode of operation for intelligent storage system 120. During another mode of operation, intelligent storage system 120 can receive file system commands.

A number of layers are illustrated within node 102. Application 302 first initiates a file system access by executing an instruction that causes a file system call. This file system access may include a read operation, a write operation, or any other type of file access or file maintenance operation. The file system access passes into file system 304, which converts the file system access into lower-level commands to access logical blocks of storage. Logical volume manager 306 receives these lower-level commands and converts them into even lower-level block access commands. Note that logical volume manager 306 may additionally perform mirroring for fault-tolerance purposes. Logical volume manager 306 passes the block-level commands to SCSI driver 308. SCSI driver 308 converts the block-level commands into a form that adheres to the SCSI protocol. SCSI driver 308 passes the commands through transport interface 310, which converts the SCSI protocol command into a form that is suitable for transmission over a transport link.

Within intelligent storage system 120, the block-level command is received from node 102 across transport link 311 and is converted back into a SCSI protocol command at transport interface 312, and is then passed into SCSI emulator 314. SCSI emulator 314 provides an interface that appears to be a dumb SCSI device, such as a disk drive. Within SCSI emulator 314, the block-level command is converted into a format that allows the block to be looked up within cache 124. If the access request cannot be serviced entirely within cache 124, the access request passes through logical volume manager 317 to controller 318. Controller 318 passes the access request through SCSI device driver 320 and through SCSI to fiber channel converter 322 before forwarding the request to storage device 130.

Note that a block level access can be serviced from cache 124 (without accessing storage device 130) if the block-level access is a read operation, and the requested block is present in cache 124. During a write operation, a block that is written into cache 124 will eventually be written back to storage device 130.

Note that transport interface 312 within intelligent storage system 120 is additionally coupled to cluster forming mechanism 321 and failure detection mechanism 323. Failure detection mechanism 323 performs heartbeat and monitoring functions that determine whether or not communication with another node in the cluster has failed. Cluster forming mechanism 321 seeks to form a quorum between members of the cluster after the failure has been detected so that membership of the cluster can be reformed.

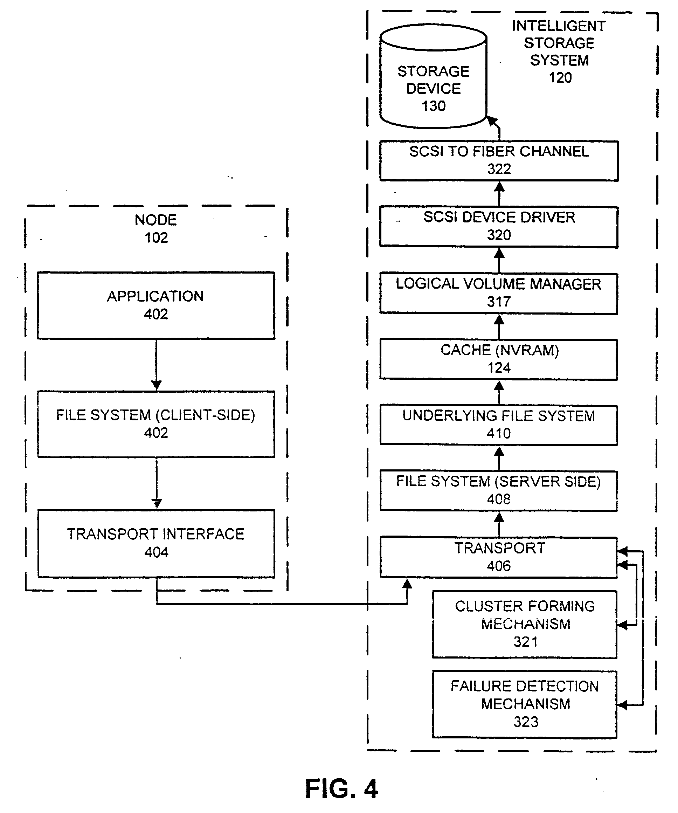

FIG. 4 illustrates system layers involved in performing a file system access wherein file-level commands are transferred to a storage system in accordance with an embodiment of the present invention. In this embodiment, application 402 generates a file system access and this access is passed into file system 402 (which is a client-side portion of a distributed file system). This file system access is immediately passed into transport interface 404, which packages the file system access for transport across a communication link from node 102 to intelligent storage system 120.

Within intelligent storage system 120, the file system access passes through transport interface 406, which unpackages the file system access and then passes it into file system 408 (which is a server-side portion of a distributed file system).

In one embodiment of the present invention, file system 402 (on the client side) and file system 408 (on the server side) act in concert to provide high availability. For example, suppose node 102 fails during a file system operation. The highly available system allows a secondary backup node, such as node 103, to continue operating in place of node 102. Note that the present invention also applies to computer systems that do not provide high availability.

File system 408 within intelligent storage system 120 passes the file system access to underlying file system 410. (Note that in general any file system can be used to implement underlying file system 410.) Underlying file system 410 attempts to satisfy the file system request from cache 124. If a further access is required to storage device 130, the file system access is converted into a block-level request. This block-level request passes through logical volume manager 317 to SCSI device driver 320. Next. the block-level request passes through SCSI device driver 320 and is converted into a format suitable for transmission over a communication channel adhering to the fiber channel standard in block 322. This block-level request is then forwarded to storage device 130.

Note that the present invention allows for two modes of operation. A first mode of operation (illustrated in FIG. 4) allows intelligent storage svstem 120 to accept higher-level file access commands. A second mode of operation (illustrated in FIG. 3) allows intelligent storage system 120 to accept lower-level block access commands.

The first mode of operation eliminates the work involved in converting an access request into a block-level form within node 102, and then emulating a simple SCSI device with intelligent storage system 120, which converts the access into a higher-level form that is subsequently converted back down into a lower-level form before passing to storage device 130.

Instead, the first mode of operation sends the higher-level file system access directly to intelligent storage system 120 without first converting it into a block-level form.

Also note that as in FIG. 3, transport interface 312 within intelligent storage system 120 is additionally coupled to cluster forming mechanism 321 and failure detection mechanism 323.

### Process of Detecting a Communication Failure and Reconfiguring a Cluster

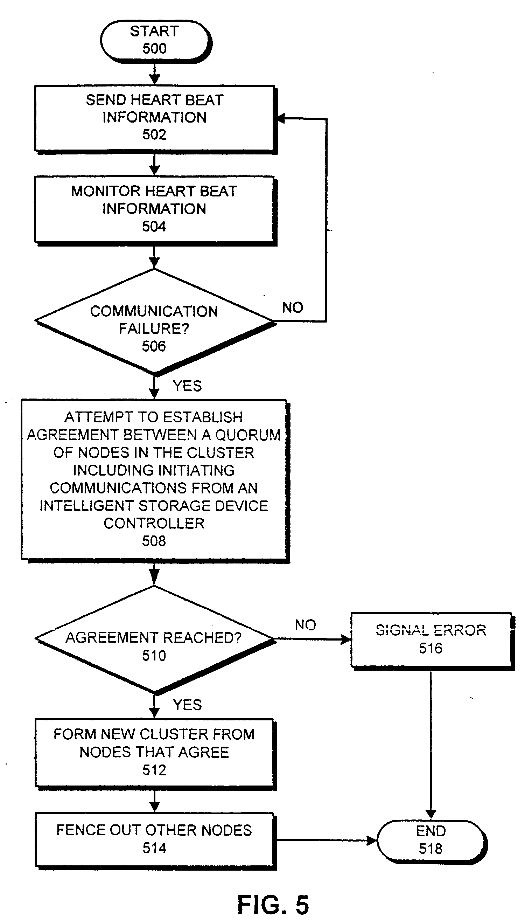

FIG. 5 is a flow chart illustrating the process of detecting a communication failure and reconfiguring a cluster in accordance with an embodiment of the present invention. The system starts by sending heartbeat information from a node to other nodes in the cluster (step 502). Note that controllers 122 and 123 from intelligent storage device 120 participate in this process of sending heartbeat information. The node also monitors heartbeat information received from other nodes in clustered computing system 100 (step 504). From this heartbeat information, the node determines whether there has been a failure in communicating within another node in clustered computing system 100, or if nodes in clustered computing system 100 do not have a consistent view. of the state of the cluster.

The node may also be able to determine that there has been a failure indirectly, by receiving a communication from another node in the cluster indicating that there has been a failure. If no failure is detected at step 506, the node returns to step 502 to send and monitor heartbeat information again. If a failure is detected, the system attempts to establish an agreement between a quorum of the members of the cluster (step 508). This involves sending communications from the node to other nodes in the cluster in an attempt to reach an agreement between enough nodes to establish a quorum. Note that controllers 122-123 from intelligent storage device 120 have the same capabilities as nodes 102-105 in the process of reforming the cluster, and can initiate communications with other nodes in the cluster to establish a quorum. Also note that cluster members can have different numbers of votes in the quorum determination. For example, an important node, such as file server may have more votes than another node. In a second example, each controller 122-123 is given a vote for each storage device under its direct control.

The system next determines if the agreement has been reached (step 510). If agreement cannot be reached, the node can signal an error condition (step 516). Alternatively, the node can simply continue to operate without having access to the shared resources of the cluster. Note that these shared resources can include, but are not limited to, storage devices, memories, communication linkages, and any other shared resources of clustered computing system 100.

If agreement can be reached. the system forms a new cluster between the nodes that agree (step 512), and the other nodes are fenced out of the cluster (step 514) so that they can no longer have access to the shared resources of the cluster and can no longer participate in performing to tasks assigned to the cluster. The nodes within the new cluster then continue to operate as they: did prior to the failure.

The foregoing descriptions of embodiments of the invention have been presented for purposes of illustration and description only. They are not intended to be exhaustive or to limit the invention to the forms disclosed. Accordingly, many modifications and variations will be apparent to practitioners skilled in the art. Additionally, the above disclosure is not intended to limit the invention. The scope of the invention is defined by the appended claims.

## Claims

1. A method for establishing an agreement between members (102, 103, 104, 105) of a cluster of nodes in a clustered computing system (100) for purposes of forming a new cluster if there is a failure to communicate with a member of the cluster, the clustered computing system including an intelligent storage device controller (122, 123) that acts as a cluster member during a process of reforming the cluster, the method comprising:
detecting a failure to communicate with the member of the cluster; and
in response to detecting the failure, attempting (508) to form a new cluster by, attempting to establish an agreement between a group of members of the cluster, the group including at least a quorum of the members of the cluster,
wherein attempting to establish the agreement includes initiating communications from the intelligent storage device controller (122, 123) with other nodes in the cluster (102, 103, 104, 105), and
if the agreement is established, forming the new cluster (202) from the group of members of the cluster that have reached agreement.

2. The method of claim 1, wherein the quorum contains a subset of the members of the cluster with more than one half of a number of votes that are distributed between the members of the cluster.

3. The method of claim 1 or claim 2, wherein detecting the failure includes periodically communicating (502, 504) with other members (102, 103, 104, 105) of the cluster in order to determine whether communications with the other members of the cluster have failed.

4. The method of claim 3, wherein communicating with the other members (102, 103, 104, 105) of the cluster includes communicating information that enables members of the cluster to verify that they have a consistent view of a state of the cluster.

5. The method of claim 1 or claim 2, wherein detecting the failure includes periodically receiving information at the intelligent storage device controller (122, 123) from other members of the cluster, the information enabling the intelligent storage device controller to determine whether communications with the other members of the cluster have failed.

6. The method of claim 1 or claim 2, wherein detecting the failure includes being informed of the failure by another member of the cluster.

7. A method according to any preceding claim, wherein forming the new cluster further comprises excluding nodes in the clustered computing system that are not members of the new cluster from accessing shared resources of the clustered computing system.

8. A method according to any preceding claim, wherein different members of the cluster can have different numbers of votes for purposes of establishing the quorum.

9. A method according to any preceding claim, wherein the intelligent storage device controller has one vote for each storage device under its control for purposes of establishing the quorum.

10. A method according to any preceding claim, wherein the intelligent storage device controller can process both tile-level and block-level accesses to a storage device.

11. A method according to any preceding claim, wherein cluster membership gives a node access to shared resources of the clustered computing system.

12. A method according to any preceding claim, wherein the clustered computing system includes more than one intelligent storage device controller that acts as a cluster member.

13. A method according to any preceding claim, further comprising controlling at least one storage device using the intelligent storage device controller.

14. An apparatus that establishes an agreement between members (102, 103, 104, 105) of a cluster of nodes in a clustered computing system (100) for purposes of forming a new cluster (202) if there is a failure to communicate with a member of the cluster, the apparatus comprising:
an intelligent storage device controller (122, 123) that controls at least one storage device (130, 131, 132, 133) for the clustered computing system;
a detection mechanism (323), within the intelligent storage device controller, that is configured to detect a failure to communicate with the member of the cluster; and
a cluster forming mechanism (321), within the intelligent storage device controller;
wherein if the failure is detected, the cluster forming mechanism (321) is configured to, attempt to establish the agreement between a group of members of the cluster, the group including at least a quorum of the members of the cluster, and to
form the new cluster from the group of members of the cluster that have reached agreement if the agreement is established.

15. The apparatus of claim 14, wherein the quorum (202) contains a subset of the members (102, 103, 104, 105, 122, 123) of the cluster with more than one half of a number of votes that are distributed between the members of the cluster.

16. The apparatus of claim 14 or claim 15, wherein the detection mechanism (323) is configured to periodically communicate with other members of the cluster in order to determine whether communications with the other members of the cluster have failed.

17. The apparatus of claim 16, wherein the detection mechanism (323) is configured to communicate information that enables members of the cluster to verify that they have a consistent view of a state of the cluster.

18. The apparatus of claim 14 or claim 15, wherein the detection mechanism (323) is configured to periodically receive information from other members of the cluster, the information enabling the intelligent storage device controller to determine whether communications with the other members of the cluster have failed.

19. An apparatus according to any one of claims 14 to 18, wherein the cluster forming mechanism (321) is configured to exclude nodes (102, 103) in the clustered computing system (100) that are not members of the new cluster (202) from accessing shared resources of the clustered computing system.

20. An apparatus according to any one of claims 14 to 19, wherein different members of the cluster can have different numbers of votes for purposes of establishing the quorum.

21. An apparatus according to any one of claims 14 to 20, wherein the intelligent storage device controller (122, 123) has one vote for each storage device (130, 131, 132, 133) under its control for purposes of establishing the quorum (202).

22. An apparatus according to any one of claims 14 to 21, wherein the intelligent storage device controller (122, 123) is configured to process both file-level and block-level accesses to a storage device (130, 131, 132, 133).

23. An apparatus according to any one of claims 14 to 22, wherein cluster membership gives a node access to shared resources of the clustered computing system (100).

24. An apparatus according to any one of claims 14 to 23, wherein the clustered computing system includes more than one intelligent storage device controller (122, 123) that acts as a cluster member.

25. A computer readable storage medium storing instructions that when executed by a computer cause the computer to perform a method for establishing an agreement between members of a cluster of nodes in a clustered computing system for purposes of forming a new cluster if there is a failure to communicate with a member of the cluster, the clustered computing system including an intelligent storage device controller that acts as a cluster member during a process of reforming the cluster, according to any one of claims 1 to 13.
